# EUROPEAN PATENT SPECIFICATION

(11) **EP 0 714 060 B1**
(45) Date of publication and mention of the grant of the patent: **24.08.2005**
(21) Application number: 95308209.6
(22) Date of filing: 16.11.1995
(51) Int. Cl.: G06F 9/24, G06F 12/06, G06F 15/78, G06F 9/445

(54) **One chip microcomputer with built-in non-volatile memory**
Ein-Chip-Mikrorechner mit eingebautem nichtflüchtigem Speicher
Micro-ordinateur monopuce avec mémoire non-volatile intégrée

(30) Priority: 24.11.1994 JP 29002694; 24.11.1994 JP 29002894
(43) Date of publication of application: 29.05.1996
(73) Proprietor: SANYO ELECTRIC CO. LTD, Osaka-fu 570 (JP)
(72) Inventor: Koyama, Hiroshi, Isesaki-shi, Gunma (JP); Osawa, Hiroshi, Ora-gun, Gunma (JP)
(74) Representative: Cross, Rupert Edward Blount

(56) References cited:
- EP-A- 0 306 962
- WO-A-93/10492
- GB-A- 2 138 978
- US-A- 4 777 355
- ELECTRONIQUE INDUSTRIELLE, no. 129, 1 September 1987 PARIS FR, pages 42-48, E. CHEVAL 'Les particularités du DSP 56001 de Motorola'
- Page from the Internet www.jtag.com

## Description

### Background of the Invention

### Field of the Invention

This invention relates to a one-chip microcomputer with a built-in non-volatile memory such as an EEPROM which permits reading and writing of data.

### Prior Art

In general, one-chip microcomputers comprise a mask ROM (Read Only Memory), a program for controlling the operation of the one-chip microcomputer being stored in this mask ROM. A RAM (Random Access Memory) that permits data write/read is also built in for the purpose of storing computational data. A static RAM is conventionally used as this RAM.

One example of such a memory known in the art is an EPROM (Erasable Programmable Read Only Memory). This is a non-volatile memory which permits reading and writing of data, it being possible to erase all of the written data in one operation by irradiating the memory with UV light. Another example is an EEPROM (Electrically Erasable Programmable Read Only Memory). This a memory which permits writing and reading of data, it being possible to erase written data electrically.

This EPROM and EEPROM (referred to hereinafter as PROM) are widely used in microcomputers for evaluating programs. For this purpose, a program is written to the EPROM or EEPROM of the microcomputer, and the program is evaluated by operating the computer. When there are errors in the program, they are corrected, and the evaluation is repeated until there are no more errors. In a mask ROM, this updating of data cannot be performed, however it is possible using a PROM, hence these ROM are built into microcomputers used for evaluation purposes.

When a PROM is used as a memory for an operating program, the program can be updated by the user, and there are also PROM known in the art used as memories for operating programs in one-chip computers for mass production.

When the programs in one-chip microcomputers comprising PROM are to be updated, the microcomputer is first disposed on a "write" substrate. The substrate is connected to a PROM writer, and a PROM write address and write data are supplied to the microcomputer from the PROM writer. In this way, desired data is written to a suitable address of the one-chip microcomputer.

However, to write desired data to the PROM of this type of microcomputer, a special "write" substrate and a PROM writer are required which renders the operation troublesome.

Further, in a one-chip microcomputer comprising an ordinary static RAM as a memory for storing computational data, the data stored in the static memory was erased if the power failed, and the lost data could not be recovered even when power was restored. In such a case, it was necessary to execute the original program, write the data in its original form to the static RAM, and repeat the computations which had been performed until power failed.

When a PROM is used as a storage area for computational data or the like, this type of problem can be resolved. However, as a one-chip microcomputer cannot itself update data in the PROM, it could not be used instead of a data RAM.

WO 93/10492 discloses a single chip microcontroller including EPROM which can be autoprogrammed using a program routine stored in on board ROM.

US-A-4777355 discloses an IC card with EEPROM to which data or code can be written under the control of a loading/writing program stored in ROM on the card.

### SUMMARY OF THE INVENTION

The invention provides a one-chip microcomputer according to claim 1.

When the write program data is read from the second non-volatile memory, the control circuit writes data into the first non-volatile memory by executing the program stored in the second non-volatile memory, so this one chip micrcomputer can rewrite data in the first non-volatile memory as its own function. Therefore, the first non-volatile memory can be used as a random access memory.

If the first non-volatile memory is used, random memory data in the first non-volatile memory is maintained even if the power for the single chip microcomputer is removed. Therefore, this single chip microcomputer is preferably used when it is necessary to switch power on and off deliberately during the operation of the microcomputer. When the power is switched on again, operation of the microcomputer is promptly resumed due to fact that the data when power was last is stored in the first non-volatile memory.

If the first non-volatile memory is used as a memory for storing program data, the program data is easily written by using the one chip microcomputer's function of rewriting data in the first non-volatile memory.

It is preferable to comprise:
a decoding circuit which decodes program data read from said first and second non-volatile memories, and
said control circuit specifies a data write address in said first non-volatile memory according to program data read from said second non-volatile memory, and writes data to said address, when program data for accessing said first non-volatile memory is read from said second non-volatile memory, and said program data is decoded by said decoding circuit.

According to this feature, it is easy to access the first non-volatile memory by executing the program stored in second non-volatile memory. Therefore, the program data stored in the first non-volatile memory is easily rewritten.

It is preferable to comprise:
a first address circuit for specifying a read address in said first non-volatile memory, a second address circuit for specifying a write address in said first non-volatile memory, and
a selection circuit for selecting either the output of said first address circuit or the output of said second address circuit.

It is preferable that said first address circuit alternatively specifies an address in said first non-volatile memory and an access address in said second non-volatile memory. According to this feature, it is easy to access the first non-volatile memory by executing the program stored in the second non-volatile memory. Therefore, it is easy to rewrite program data stored in the first non-volatile memory.

It is preferable that data stored in said second non-volatile memory is transferred to said second address circuit and data is written to an address specified by said transferred data in said second address circuit when data is written to said first non-volatile memory.

Furthermore, it is preferable that an access address in the second non-volatile memory, jumps to an address in which program data for executing a write operation of the first non-volatile memory is stored, when an interrupt signal instructing a write operation in the first non-volatile memory is issued. Then the write operation of the first non-volatile memory is easily executed.

It is preferable to comprise:
an interrupt control circuit which issues said interrupt signal when it is detected that data supplied from an external source, which is to be written to said first non-volatile memory, reaches a predetermined number of bits.

It is preferable that said interrupt control circuit comprises a counter for counting supplied data, and issues an interrupt signal when the value of said counter reaches a predetermined value.

It is preferable to comprise:
a shift register for storing said data supplied from an external source, and said data stored in said shift register is written to said first non-volatile memory by said control circuit based on program data stored in said second non-volatile memory.

It is preferable that said second non-volatile memory is a read-only memory that does not permit rewriting of data.

It is preferable that said second non-volatile memory is a memory which permits rewriting of data.

### BRIEF DESCRIPTION OF THE DRAWINGS

Fig. 1 is a view showing the structure of a one-chip microcomputer according to a first embodiment.
Fig. 2 is a time chart showing a second embodiment.
Fig. 3 is a time chart showing the operation of the first and second embodiments.
Fig. 4 is a diagram showing the structure of a one-chip microcomputeraccording to the second embodiment.
Fig. 5 is a time chart showing the operation of the second embodiment.

### PREFERRED EMBODIMENT

### Embodiment 1

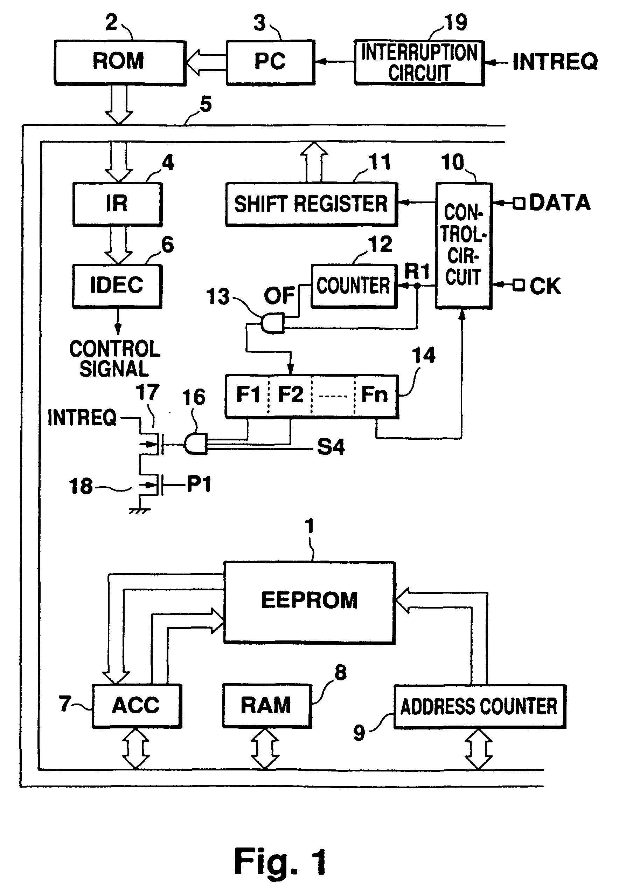

Fig. 1 is a diagram showing a one-chip microcomputer according to Embodiment 1 wherein an EEPROM is used as a first non-volatile memory.

In Fig. 1, (1) is an EEPROM (first non-volatile memory) which allows writing and reading of data, and electrical erasure of data. (2) is a mask ROM (second non-volatile memory), a read-only memory which does not allow rewriting of stored program data used for controlling the one-chip microcomputer. In particular, program data controlling the data read/write operation of the EEPROM (1) is stored as subroutine commands in an identifying address of the mask ROM (2). (3) is a program counter PC which counts a predetermined clock and outputs address data for accessing addresses in the mask ROM (2). (4) is an instruction register IR which holds program data supplied via a data bus (5) from the mask ROM (2). (6) is an instruction decoder IDEC which decodes program data held in the instruction register (4) and issues a control signal for operating the one-chip microcomputer. (7) is an accumulator ACC that stores computing data in the one-chip microcomputer supplied via the data bus (5). (8) is a RAM (having a capacity of e.g. 128 byte wherein one word comprises 8 bits), this RAM (8) being connected to the accumulator (7) via the data bus (5) so as to perform two-way exchange of data. (9) is an address counter which outputs an address for accessing the EEPROM (1).

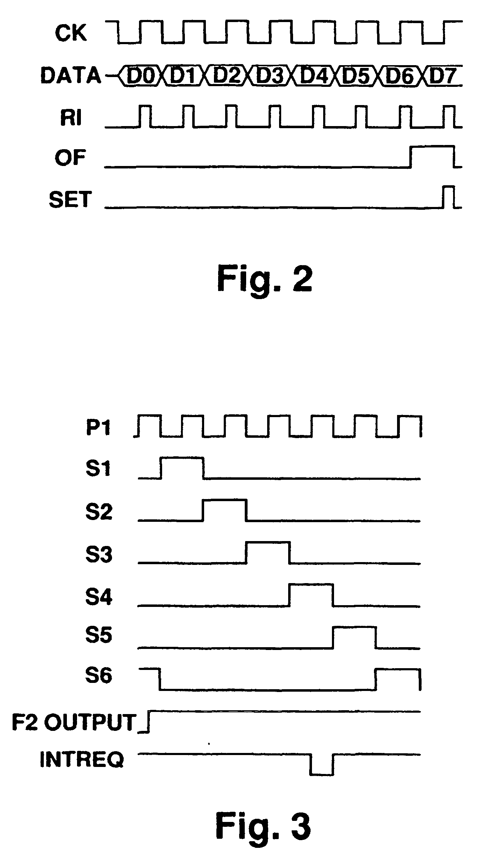

(10) is a control circuit to which data "DATA" and clock "CK" are applied in order to be written to the EEPROM (1). If there are for example 8 bits in each address of the EEPROM (1), 8 bit data "DATA" (MSB D0 - LSB D7) is serially output in synchronism with the fall of the clock CK from the control circuit (10) as shown in Fig. 2. (11) is an 8 bit shift register into which the 8 bit data "DATA" output by the control circuit (10) is input and held. Also, a pulse RI in synchronism with the pulse of the clock CK is output by the control circuit (10) as shown in Fig. 2. (12) is a counter which counts the pulses RI, its internal logic being so constructed that an overflow signal OF is issued from when the seventh pulse RI falls away to when the eighth pulse RI falls away as shown in Fig. 2. In other words, OF is only at high level from a trailing edge of the seventh pulse to a trailing edge of the eighth pulse. Consequently, only the eighth pulse RI is output as a set signal "SET" from an AND gate connected by its two inputs to the I/O lines of the counter (12) as shown in Fig. 2. In other words, the set signal "SET" is issued when D7, the eighth bit of the 8 bit serial data "DATA", is held in the shift register. (14) is a control register comprising flags F1, F2.....Fn. A value of [1] is held in the flag F1 when an interruption request signal INTREQ described hereinafter is issued, and a value of [0] is held in the flag F1 when issuance of an interruption request is disallowed, by means of a program command from the mask ROM (2). The flag F2 is set to [1] by applying the set signal "SET". The flag F2 is reset from its setting to [0] during execution of a subroutine read from the mask ROM (2) according to the interruption request signal INTREQ. In other words, the flag F2 should be [1] only when the interruption request signal INTREQ is issued, and it may be [0] at all other times. Further, a value of [1] is held in the flag Fn when the control circuit (10) is operational, and a value of [0] is held in the flag Fn when operation of the control circuit (10) is disallowed, by means of a program command from the mask ROM (2). (16) is an AND gate, the contents of the flags F1, F2 of the control register (14) and a system clock S4 described hereinafter being applied to its three inputs. As shown in Fig. 3, the one-chip microcomputer operates so that six periodic clocks S1 - S6 which are based on a clock P1, form one machine cycle, only the system clock S4 being applied as one input of the AND gate (16). In other words, when the system clock S4 pulse appears, when the flags F1, F2 are both [1], i.e. when issuance of the interruption request signal INTREQ is allowed, and the set signal "SET" is [1], a [1] is output from the gate (16). (17), (18) are N channel MOS transistors (referred to hereinafter as NMOS transistors) whereof the drain of NMOS transistor (18) is connected to the drain of NMOS transistor (17). The NMOS transistor (17) is an open drain type, the source of the NMOS transistor (18) being earthed and the afore-said clock P1 being applied to the gate. When the flags F1, F2, system clock S4 and clock P1 are all [1] as shown in Fig. 3, the NMOS transistors (17), (18) are ON, and the interruption request signal INTREQ is [0] (low level). According to this embodiment, an interruption request signal INTREQ = [0] signifies the issuance of an interruption request. (19) is an interruption circuit that detects when an interruption request has been issued by application of the interruption request signal INTREQ [0]. The interruption request circuit (19) sets address data for the mask ROM (2), in which a program for writing the contents of the shift register (11) to the EEPROM (1) is stored, in the program counter (3). In other words, the contents of the program counter (3) are changed from a state of being sequentially incremented to the aforesaid address data which corresponds to the address of a subroutine for interrupt processing, then the reading out address of the mask ROM (2) jumps to a subroutine for interrupt processing when the interruption request signal INTREQ is issued. Program data which controls write operations to the EEPROM (1) is therefore read from the mask ROM (2), this data is decoded by the instruction decoder (6), and a corresponding control signal is issued. Consequently, after the 8 bit data held in the shift register (11) has been accumulated in the accumulator (7) via the data bus (5), it is written to the RAM (8). This operation is repeated, and when for example 128 bytes (equivalent to 1 page) of 8 bit data has been written in the RAM (8), one page of predetermined addresses in the EEPROM (1) are sequentially accessed by the address counter (9) by means of subsequent program commands in the mask ROM (2), so that the 8 bit data stored in the RAM (8) is sequentially written to specified addresses in the EEPROM (1) via the accumulator (7). The storage capacity of the EEPROM (1) may for example be 1 Kbyte.

After data write operations to the EEPROM (1) are completed, the mask ROM (2) returns to the main routine program. When reading of data from the EEPROM (1) is commanded by a program command from the mask ROM (2), predetermined addresses of the EEPROM (1) are accessed by the address counter (9), and after data read from the accessed addresses is temporarily stored in the accumulator (7), it is written to the RAM (8) via the data bus (5). Hence, the data in the EEPROM (1) is read.

According to this embodiment, the operation was described where the serial data "DATA" was input as initial data from outside the one-chip microcomputer, and this data "DATA" was written to and read from the EEPROM (1). The invention is however not limited to this arrangement, it being understood that the EEPROM (1) may be used instead of a conventional static RAM as a data memory for writing and reading computational data obtained during the normal operation of the microcomputer. For example, data is once written to the RAM (8) and then written to EEPROM (1) via ACC (7), or data of data bus (5) is written to EEPROM (1) via ACC (7) without once stored in RAM (8).

Hence, due to the use of a built-in EEPROM (1) that permits data read/write as a RAM, it is possible to provide a self read/write one-chip microcomputer wherein read/write/update of data to and from the EEPROM (1) is performed according to program data stored in the mask ROM (2). The time required for read/write of data to and from the EEPROM (1) is therefore shortened. Further, as the contents written in the EEPROM (1) are retained even if the power is cut, this one-chip microcomputer may be used when it is necessary to switch power on and off deliberately during operation of the microcomputer. When the power is switched on again, operation of the microcomputer is promptly resumed due to the data stored in the EEPROM (1) immediately before power was interrupted.

### Embodiment 2

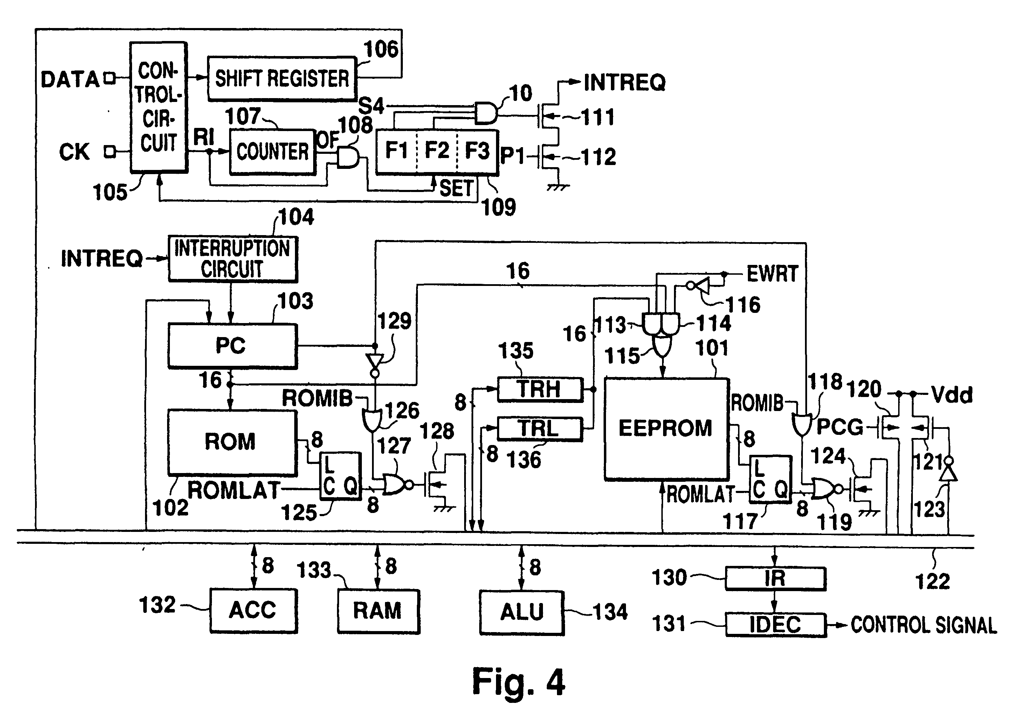

Fig. 4 is a diagram showing a one-chip microcomputer according to a second embodiment of this invention.

In Fig. 4, (101) is an EEPROM (1st non-volatile memory) in which program data for operating the microcomputer and data for executing the program is stored. This EEPROM (101) has a storage capacity of for example 50 Kbyte, each byte (1 word) comprising 8 bits. (102) is a mask ROM in which program data for updating various data written to the EEPROM (101) is stored. The mask ROM (102) has a storage capacity of 50 Kbyte as in the case of the EEPROM (101), each byte comprising 8 bits. The program storage data of the mask ROM (102) is divided into a plurality of libraries depending on the method of updating the data in the EEPROM (101). (103) is a program counter PC for accessing addresses in the EEPROM (101) and mask ROM (102). Here, addresses in the EEPROM (101) and mask ROM (102) are assigned in the same address space. As the combined storage capacity of the EEPROM (101) and mask ROM (102) is 100 Kbyte, the address data output by the program counter (103) is 17 bits. Specifically, when the most significant bit (MSB) in the program counter (103) is [0], the EEPROM (101) will be accessed, and when the most significant bit is [1], the mask ROM (102) will be accessed. (104) is an interruption circuit, a value in the program counter (103) being forcibly updated by address data in the EEPROM (101) in which a program for accessing the mask ROM (102) is stored when an interruption request signal INTREQ described hereinafter, is applied. The circuit arrangement for generating this interruption request signal INTREQ is essentially the same as that of Embodiment 1, (10) - (18) in Embodiment 1 respectively corresponding to (105) - (112) in Embodiment 2, and the flag Fn corresponding to F3.

Therefore, when the flags F1, F2 are [1] and S4 is [1], the interruption request signal INTREQ is [0] (low level). The interruption request signal INTREQ is valid when it is low level, a value in the program counter (103) being forcibly updated when the signal is applied to the interruption circuit (104). According to this embodiment, the interruption request signal INTREQ was issued with the timing of the system clock S4, however there are also different interruption request signals INTREQ issued with timings of S1, S2, S3, S4, S5 and S6. In order to issue these interruption request signals INTREQ with different timings, the system clock S4 applied to the AND gate (110) must be updated by the other system clocks.

The AND gates (113), (114) and the OR gate (115) form a multiplexer. Although not shown, 16 multiplexers (15 multiplexers are not shown) are provided corresponding to the 16 bit address data output by the program counter (103). All of 16 multiplexers have same structures, but only the input address data is different each other. The 16 bit output of the program counter (103) is connected to one input of the AND gate (114), a signal EWRT described hereinafter being applied to the other input of the AND gate (114) via an inverter (116). This signal EWRT is [0] when a program of the main routine is read from the EEPROM (101) and normal operation is performed. When normal operation is performed, therefore, the AND gate (114) opens, a 16 bit address in the program counter (103) is applied to the EEPROM (101), and this address in the EEPROM (101) is accessed. The aforesaid signal EWRT is directly applied to one side of the AND gate (113).

(117) is a latch circuit which latches 8 bit data read from the EEPROM (101). Although not shown, eight latch circuits (117) are provided corresponding to the 8 bit output of the EEPROM (101). In Fig. 4, only one latch circuit (117) is shown, seven latch circuits are not shown. Each bit of the 8 bit data read from the EEPROM (101) is applied to the L (latch input) terminal of the each latch circuits (117), and a signal ROMLAT described hereinafter is applied to the C (clock) terminals of eight latch circuits (117). The most significant bit of the address data output by the program counter (103) is applied to one input of an OR gate (118), and a signal ROMIB described hereinafter is applied to the other input. Eight NOR gates (119) (only one is shown, the other are not shown) are provided corresponding to the eight latch circuits (117). Each of 8 bit data output from the Q (output) terminals of the eight latch circuits (117) is applied to one input of each of eight NOR gates(119), the outputs of the OR gate (118) being applied to all the other inputs of the eight NOR gates. Each output of NOR gates (119) is connected to each gate of eight NMOS transistors 124 (only one is shown, the other seven are not shown). Each drain of NMOS transistors 124 is connected to each bit of data bus 122, while all sources of NMOS transistors 124 are earthed.

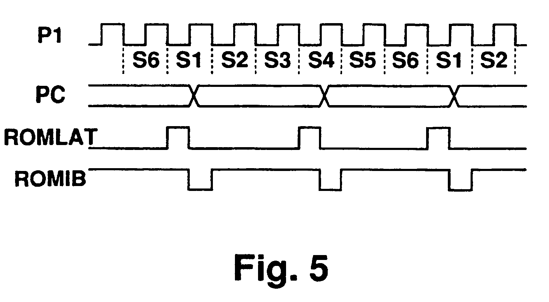

The read operation of the EEPROM (101) will now be described with reference to Fig. 5. The value in the program counter (103) is incremented or forcibly updated by a predetermined value in synchronism with the clock pulse P1 while the system clocks S1 and S4 are generated. As the 8 bit data read from the EEPROM (101) is held in the latch circuit (117) depending on the 16 bit address data in the program counter (103), the aforesaid signal ROMLAT goes high level immediately before the value in the program counter (103) is updated. Due to the fact that the signal ROMLAT is high level, therefore, 8 bit data is read from the latch circuit (117). Also, as the output of the latch circuit (117) is output from the NOR gate (119), the signal ROMLAT falls to low level for a certain time immediately after it goes high level. As stated hereinabove, address data is assigned to the same address space in the EEPROM (101) and mask ROM (102), and the most significant bit of the 17 bits of address data in the EEPROM (101) is fixed at [0]. The output of the OR gate (118) is therefore low level while the signal ROMIB is low level, which is the period when data is read from the EEPROM (101), and an inversion signal of the Q terminal output of the latch circuit (117) is output from the NOR gate (119).

(120), (121) are P channel MOS transistors (referred to hereinafter as PMOS transistors), the sources connected to a power supply Vdd and the drains connected to each line (bit) of 8 bit data bus (122). Also, a precharging signal PCG for precharging the data bus (122) to high level is applied to the gate of the PMOS transistor (120), and the gate of the PMOS transistor (121) is connected to the data bus (122) via an inverter (123). In other words, the 8 lines (bit) of the data bus (122) are all held at high level when the precharge signal PCG goes low level. Furthermore, the high level of the lines of data bus (122) are maintained by PMOS transistor (121). Eight NMOS transistors (124) are provided corresponding to the eight NOR gates (119). The gates of the eight NMOS transistors (124) are respectively connected to the outputs of the corresponding eight NOR gates (119), the drains are respectively connected to the 8 lines of the data bus (122), and the sources are earthed. When a bit of the 8 bits of data output by the EEPROM (101) is [0], i.e. when the Q terminal output of the latch circuit (117) is [0], the output of the NOR gate (119) is [1], and the NMOS transistor (124) switches ON. Low level [0] is therefore transmitted to the line of the data bus (122) to which the NMOS transistor (124) which has switched ON, is connected. Conversely, when a bit of the 8 bits of data output by the EEPROM (101), i.e. when the Q terminal output of the latch circuit (117) is [1], the output of the NOR gate (119) is [0], the NMOS transistor (124) goes OFF, and high level [1] is transmitted to a predetermined line of the data bus (122).

A latch circuit (125), OR gate (126), NOR gate (127) and NMOS transistor (128) (101) are also provided on the read side of the mask ROM (102) as on the read side of the EEPROM (101). Further, as the most significant bit of the address data of the mask ROM (102) is [1], the most significant bit of the 17 bits of address data is applied to one input of the OR gate (126) via the inverter (129). As reading of the mask ROM (102) is the same as reading of the EEPROM (101), a description of this operation will be omitted here.

(130) is an instruction register IR, and the program data read from the EEPROM (101) or mask ROM (102) comprises 8 bits held via the data bus (122). (131) is an instruction decoder IDEC which decodes the contents of the instruction register (130) and issues a control signal to control the operation of the one-chip microcomputer. (132) is an accumulator ACC connected to the data bus (122) which stores the 8 bit data "DATA" held in the shift register (106) and various computational data. (133) is a RAM having a storage capacity of for example 128 bytes (equivalent to 1 page of the EEPROM (101)), each byte comprising 8 bits. 128 bytes of the 8 bit data "DATA" in the shift register (106) that were stored in the accumulator (132) are written to this RAM (133) via the data bus (122). (134) is an arithmetic and logical unit ALU that performs various computations based on program data read from the mask ROM (102), and it is connected to the data bus (122).

(135), (136) are address registers TRL, TRH used for accessing addresses in the EEPROM (101) when the data in the EEPROM (101) is updated, the lowermost 8 bits being set in the address register (135) and the uppermost 8 bits being set in the address register (136) based on the decoding result of the program data in the mask ROM (102).

The operation of Fig. 4 having the aforesaid construction will now be described.

After program data for operating and controlling the one-chip microcomputer has first been written to the EEPROM (101), normal operation is performed based on the decoding result of program data of the main routine read from the EEPROM (101). [1] is written to the flags F1, F3 of the control register (109), the control circuit (105) becomes operational and issuance of the interruption request signal INTREQ is permitted.

When the user of the one-chip microcomputer updates program data in a predetermined address of the EEPROM (101), program data "DATA" for updating is applied from an external source in 8 bit units. The program data "DATA" is therefore incorporated in the control circuit (105) in synchronism with the trailing edge of the clock CK, and sequentially held in the shift register (106). When 8 bits of program data "DATA" are held in the shift register (106), a low level interruption request signal INTREQ is issued while the system clock S4 is generated (high level), and this interruption request signal INTREQ (low level) is applied to the interruption circuit (104). Due to the output of the interruption circuit (104), the value in the program counter (103) is forcibly updated by address data corresponding to the address where program data for writing the contents of the shift register (106) to the RAM (133) is stored (updated by the "header" address of the subroutine for writing the contents of the shift register to the RAM (133)). Addresses in the EEPROM (101) corresponding to addresses in the program counter (103) are then accessed, and program data is read from the EEPROM (101). The read program data is decoded by the instruction decoder (131), and a control signal is issued (becomes high level). Based on this control signal, the contents held in the shift register (106) are temporarily stored in the accumulator (132) via the data bus (122), and then written to the header address of the RAM (133). By repeating this interruption operation 128 times, 128 bytes of data are sequentially written to the next address in the RAM (133) one by one.

The EEPROM (101) then terminates the subroutine program, and returns to the main routine program. In this main routine program, the address assigned to predetermined program data is accessed. This predetermined program data is program data (CALL command) for accessing the header address of a predetermined library stored in the mask ROM (102). When this program data is read from the EEPROM (101), decoded by the instruction decoder (131) and recognized as a CALL command, a value in the program counter (103) is forcibly set to a value read from the next three addresses in the EEPROM (101). In other words, 17 bits of data are sequentially read with the timing of the signal ROMIB (low level) from the next addresses of the EEPROM (101), and this read data is forcibly set to the program counter (103) as address data for accessing the header address of the predetermined library in the mask ROM (102). More specifically, the lowermost 8 bits, uppermost 8 bits and most significant bit [1] of the aforesaid address data are stored in three addresses following the address in which the CALL command of the EEPROM (101) is stored, and they (lowermost 8 bits, next 8 bits and MSB) are sequentially set in the program counter (103) each time the signal ROMIB goes low level. Due to the specification of address in the ROM (102) by the program counter (103) in this way, program operation is transferred to the mask ROM (102). Program data is then read from the mask ROM (102) according to the value of the program counter (103), and decoded by the instruction decoder (131). A program for updating the address registers (135), (136) is prestored in program data of the mask ROM (102) (in a predetermined library). When the program data in the mask ROM (102) is decoded by the instruction decoder (131), address data in the EEPROM (101) is set in the address registers (135), (136) so as to perform data update. More specifically, address data stored in the next address of the mask ROM (102) is sequentially set in the address registers (135), (136) each time the value in the program counter (103) is incremented. When the value in the program counter (103) is next incremented and program data in the mask ROM (102) is decoded, 1 byte of program data that had been written in the RAM (133) is written to an address defined by the address registers (135), (136) via the accumulator (132) and data bus (122). The signal EWRT is then [1], so the addresses defined by the address registers (135), (136) are specified in the EEPROM (101). Subsequently, when the value in the program counter (103) is incremented, program data read from the mask ROM (102) is decoded, only the value in the address register (135) is increased by +1 by the ALU (134), and this value is reset in the address register (135). When the value in the program counter (103) is next incremented, program data in the mask ROM (102) is decoded, and 1 byte of data in the next address written in the RAM (133), is written to the next address defined by the address registers (135), (136) via the accumulator (132) and data bus (122). By repeating this operation, 128 bytes of program data in the EEPROM (101) are updated.

Hence by incorporating in the one-chip microcomputer, the EEPROM (101) that permits data write/read as a program memory, and the mask ROM (102) in which program data for updating the program data of the EEPROM (101) is stored, update of program data for operating and controlling the microcomputer is easy, one-chip microcomputers having different programs can be manufactured in a short time, and cost increases can be suppressed.

According to this invention, by incorporating in a one-chip microcomputer,a first non-volatile memory that permits data write/read as a program memory, and a second non-volatile read-only memory for storing program data for updating the program data of the first non-volatile memory, update of program data for operating and controlling the microcomputer is easy, one-chip microcomputers having different programs can be manufactured in a short time, and cost increases can be suppressed.

### Other Considerations

In the aforesaid first and second embodiments, the mask ROM 2, 102 was provided as a second non-volatile memory for storing programs for writing data to the EEPROM 1, 101 as a first non-volatile memory. However the second non-volatile memory, instead of the mask ROM (2), may conveniently be any memory such as an EPROM or EEPROM which can update data.

If the latter arrangement is adopted, the contents of the second non-volatile memory may be updated by the user. The user may then update programs for updating data in the first non-volatile memory, and select any desired method from a plurality of data updating methods. Also, the second non-volatile memory may permit data write via an interface with an external device.

## Claims

1. A one-chip microcomputer having a built-in non-volatile memory comprising:
a first non-volatile memory (1) that permits data write/read,
a second non-volatile memory (2) in which write program data for writing data in said first non-volatile memory(1) is stored, and
a control circuit (10) for controlling writing in said first memory (1), based on program data read from said second non-volatile memory (2),
**characterised in that**
said first non-volatile memory (1) is an EEPROM (1) which allows electrical erasure and rewriting of data,
and the microcomputer includes a RAM (8) having a capacity for a page of data bytes,
said control circuit (10) being operable to repeatedly write bytes of data to the RAM (8), and, when a page of bytes has been written to the RAM (8), to sequentially access a page of predetermined addresses of the EEPROM (1), so that the bytes in the RAM (8) are sequentially written to specified addresses in the EEPROM (1) via an accumulator (7).

2. A one-chip microcomputer as defined in claim 1 wherein said first non-volatile memory (1) is used as a random access memory.

3. A one-chip microcomputer as defined in claim 1 wherein said first non-volatile memory (1) is used as a read-only memory for storing program data.

4. A one-chip microcomputer as defined in claim 1 wherein said control circuit (10) specifies a write address of said first non-volatile memory (1) based on program data read from second non-volatile memory (2), and writes data to said address.

5. A one-chip microcomputer as defined in claim 4 comprising:
a decoding circuit which decodes program data read from said first and second non-volatile memories (1, 2), and
said control circuit (1) specifies a data write address in said first non-volatile memory (1) according to program data read from said second non-volatile memory (2), and writes data to said address, when program data for accessing said first non-volatile memory (1) is read from said second non-volatile memory (2), and said program data is decoded by said decoding circuit.

6. A one-chip microcomputer as defined in claim 5 comprising:
a first address circuit for specifying a read address in said first non-volatile memory (1),
a second address circuit for specifying a write address in said first non-volatile memory (1), and
a selection circuit for selecting either the output of said first address circuit or the output of said second address circuit.

7. A one-chip microcomputer as defined in claim 6 wherein said first address circuit alternately specifies an address in said first non-volatile memory (1) and an access address in said second non-volatile memory (2).

8. A one-chip microcomputer as defined in claim 7 wherein data stored in said second non-volatile memory (2) is transferred to said second address circuit and data is written to an address specified by said transferred data in said second address circuit when data is written to said first non-volatile memory (1).

9. A one-chip microcomputer as defined in any of claims 1 to 8 wherein the address pointer in said second non-volatile memory (2) jumps to an address in which program data for executing a write operation of said first non-volatile memory (1) is stored, when an interruption signal instructing a write operation in said first non-volatile memory (1) is issued.

10. A one-chip microcomputer as defined in any of claims 1 to 9 further comprising an interruption control circuit (19) which issues said interruption signal when it is detected that data supplied from an external source, which is to be written to said first non-volatile memory (1), reaches a predetermined number of bits.

11. A one-chip microcomputer as defined in any of claims 1 to 10 wherein said interruption control circuit (19) comprises a counter for counting supplied data, and issues an interruption signal when the value of said counter reaches a predetermined value.

12. A one-chip microcomputer as defined in any of claims 1 to 11 comprising a shift register (11) for storing said data supplied from an external source, and
said data stored in said shift register (11) is written to said first non-volatile memory (1) by said control circuit based on program data stored in said second non-volatile memory (2).

13. A one-chip microcomputer as defined in any of claims 1 to 12 wherein said second non-volatile memory (2) is a read-only memory that does not permit rewriting of data.

## Patentansprüche

1. Ein-Chip-Mikrocomputer, welcher einen eingebauten nichtflüchtigen Speicher aufweist, umfassend:
einen ersten nichtflüchtigen Speicher (1), der das Lesen/Schreiben von Daten ermöglicht,
einen zweiten nichtflüchtigen Speicher (2), in dem Schreib-Programmdaten zum Schreiben von Daten in den ersten nichtflüchtigen Speicher (1) gespeichert sind, und
eine Steuerschaltung (10) zum Steuern des Schreibens in den ersten Speicher (1), basierend auf aus dem zweiten nichtflüchtigen Speicher (2) gelesenen Programmdaten,
**dadurch gekennzeichnet, dass**
der erste nichtflüchtige Speicher (1) ein EEPROM (1) ist, das ein elektrisches Löschen und Neuschreiben von Daten ermöglicht,
und der Mikrocomputer ein RAM (8) umfasst, welches eine Kapazität für eine Seite von Datenbytes aufweist,
wobei die Steuerschaltung (10) zum wiederholten Schreiben von Datenbytes zum RAM (8) betreibbar ist, und, wenn eine Seite von Bytes zum RAM (8) geschrieben worden ist, zum sequentiellen Zugriff auf eine Seite von vorbestimmten Adressen des EEPROM (1), so dass die Bytes im RAM (8) über ein Register (7) sequentiell zu festgelegten Adressen im EEPROM (1) geschrieben werden.

2. Ein-Chip-Mikrocomputer nach Anspruch 1, wobei der erste nichtflüchtige Speicher (1) als ein Arbeitsspeicher verwendet wird.

3. Ein-Chip-Mikrocomputer nach Anspruch 1, wobei der erste nichtflüchtige Speicher (1) als ein Nur-Lese-Speicher zum Speichern von Programmdaten verwendet wird.

4. Ein-Chip-Mikrocomputer nach Anspruch 1, wobei die Steuerschaltung (10) eine Schreibadresse des ersten nichtflüchtigen Speichers (1) basierend auf aus dem zweiten nichtflüchtigen Speicher (2) gelesenen Programmdaten angibt und Daten an die Adresse schreibt.

5. Ein-Chip-Mikrocomputer nach Anspruch 4, umfassend:
eine Dekodierschaltung, welche aus dem ersten und dem zweiten nichtflüchtigen Speicher (1, 2) gelesene Programmdaten dekodiert, und
wobei die Steuerschaltung (1) eine Daten-Schreibadresse im ersten nichtflüchtigen Speicher (1) gemäß aus dem zweiten nichtflüchtigen Speicher (2) gelesenen Programmdaten angibt, und Daten an die Adresse schreibt, wenn Programmdaten zum Zugriff auf den ersten nichtflüchtigen Speicher (1) aus dem zweiten nichtflüchtigen Speicher (2) gelesen werden und die Programmdaten von der Dekodierschaltung dekodiert werden.

6. Ein-Chip-Mikrocomputer nach Anspruch 5, umfassend:
eine erste Adressenschaltung zum Angeben einer Lese-Adresse im ersten nichtflüchtigen Speicher (1),
eine zweite Adressenschaltung zum Angeben einer Schreib-Adresse im ersten nichtflüchtigen Speicher (1), und
eine Auswahlschaltung zum Auswählen von entweder der Ausgabe der ersten Adressenschaltung oder der Ausgabe der zweiten Adressenschaltung.

7. Ein-Chip-Mikrocomputer nach Anspruch 6, wobei die erste Adressenschaltung abwechselnd eine Adresse im ersten nichtflüchtigen Speicher (1) und eine Zugriffsadresse im zweiten nichtflüchtigen Speicher (2) angibt.

8. Ein-Chip-Mikrocomputer nach Anspruch 7, wobei im zweiten nichtflüchtigen Speicher (2) gespeicherte Daten zu der zweiten Adressenschaltung übertragen werden und Daten an eine Adresse geschrieben werden, die durch die übertragenen Daten in der zweiten Adressenschaltung angegeben wird, wenn Daten in den ersten nichtflüchtigen Speicher (1) geschrieben werden.

9. Ein-Chip-Mikrocomputer nach einem der Ansprüche 1 bis 8, wobei der Adressenzeiger im zweiten nichtflüchtigen Speicher (2) zu einer Adresse springt, in der Programmdaten zum Ausführen einer Schreib-Routine des ersten nichtflüchtigen Speichers (1) gespeichert sind, wenn ein Unterbrechungssignal, welches eine Schreib-Routine in den ersten nichtflüchtigen Speicher (1) anweist, ausgegeben wird.

10. Ein-Chip-Mikrocomputer nach einem der Ansprüche 1 bis 9, ferner umfassend eine Unterbrechungs-Steuerschaltung (19), welche das Unterbrechungssignal ausgibt, wenn erfasst wird, dass von einer externen Quelle zugeführte Daten, welche in den ersten nichtflüchtigen Speicher (1) geschrieben werden sollen, eine vorbestimmte Anzahl von Bits erreichen.

11. Ein-Chip-Mikrocomputer nach einem der Ansprüche 1 bis 10, wobei die Unterbrechungs-Steuerschaltung (19) einen Zähler zum Zählen zugeführter Daten umfasst, und ein Unterbrechungssignal ausgibt, wenn der Wert des Zählers einen vorbestimmten Wert erreicht.

12. Ein-Chip-Mikrocomputer nach einem der Ansprüche 1 bis 11, umfassend ein Schieberegister (11) zum Speichern der von einer externen Quelle zugeführten Daten, und wobei die in dem Schieberegister (11) gespeicherten Daten durch die Steuerschaltung basierend auf im zweiten nichtflüchtigen Speicher (2) gespeicherten Programmdaten in den ersten nichtflüchtigen Speicher (1) geschrieben werden.

13. Ein-Chip-Mikrocomputer nach einem der Ansprüche 1 bis 12, wobei der zweite nichtflüchtige Speicher (2) ein Nur-Lese-Speicher ist, der kein Neuschreiben von Daten ermöglicht.

## Revendications

1. Micro-ordinateur mono-puce possédant une mémoire intégrée non volatile comprenant :
une première mémoire non volatile (1) qui permet l'écriture/lecture de données,
une seconde mémoire non volatile (2) dans laquelle sont stockées des données de programme d'écriture destinées à écrire des données dans ladite première mémoire non volatile (1), et
un circuit de commande (10) destiné à commander l'écriture dans ladite première mémoire (1), sur la base des données de programme lues à partir de ladite seconde mémoire non volatile (2),
**caractérisé en ce que**
ladite première mémoire non volatile (1) est une EEPROM (1) qui autorise un effacement électrique et une réécriture des données,
et le micro-ordinateur comprend une RAM (8) possédant une capacité d'une page d'octets de données,
ledit circuit de commande (10) étant utilisable pour écrire de manière répétée des octets de données vers la RAM (8), et, quand une page d'octets a été écrite dans la RAM (8), pour accéder de manière séquentielle à une page d'adresses prédéterminées de l'EEPROM (1), de telle manière que les octets dans la RAM (8) soient écrits de manière séquentielle aux adresses spécifiées dans l'EEPROM (1) par l'intermédiaire d'un accumulateur (7).

2. Micro-ordinateur mono-puce selon la revendication 1, dans lequel ladite première mémoire non volatile (1) est utilisée en tant que mémoire à accès aléatoire.

3. Micro-ordinateur mono-puce selon la revendication 1, dans lequel ladite première mémoire non volatile (1) est utilisée en tant que mémoire en lecture seule destinée à stocker des données de programme.

4. Micro-ordinateur mono-puce selon la revendication 1, dans lequel ledit circuit de commande (10) spécifie une adresse d'écriture de ladite première mémoire non volatile (1) sur la base des données de programme lues à partir de la seconde mémoire non volatile (2), et écrit des données à ladite adresse.

5. Micro-ordinateur mono-puce selon la revendication 4, comprenant :
un circuit de décodage qui décode des données de programme lues à partir desdites première et seconde mémoires non volatiles (1, 2), et
ledit circuit de commande (1) spécifie une adresse d'écriture de données dans ladite première mémoire non volatile (1) selon des données de programme lues à partir de ladite seconde mémoire non volatile (2), et écrit des données à ladite adresse, quand des données de programme pour accéder à ladite première mémoire non volatile (1) sont lues à partir de ladite seconde mémoire non volatile (2), et que lesdites données de programme sont décodées par ledit circuit de décodage.

6. Micro-ordinateur mono-puce selon la revendication 5, comprenant :
un premier circuit d'adressage destiné à spécifier une adresse de lecture dans ladite première mémoire non volatile (1),
un second circuit d'adressage destiné à spécifier une adresse d'écriture dans ladite première mémoire non volatile (1), et
un circuit de sélection destiné à sélectionner soit la sortie dudit premier circuit d'adressage soit la sortie dudit second circuit d'adressage.

7. Micro-ordinateur mono-puce selon la revendication 6, dans lequel ledit premier circuit d'adressage spécifie alternativement une adresse dans ladite première mémoire non volatile (1) et une adresse d'accès dans ladite seconde mémoire non volatile (2).

8. Micro-ordinateur mono-puce selon la revendication 7, dans lequel des données stockées dans ladite seconde mémoire non volatile (2) sont transférées vers ledit second circuit d'adressage et des données sont écrites à une adresse spécifiée par lesdites données transférées dans ledit second circuit d'adressage quand des données sont écrites dans ladite première mémoire non volatile (1).

9. Micro-ordinateur mono-puce selon l'une quelconque des revendications 1 à 8, dans lequel le pointeur d'adresse dans ladite seconde mémoire non volatile (2) saute à une adresse à laquelle sont stockées des données de programme destinées à exécuter une opération d'écriture de ladite première mémoire non volatile (1) quand est délivré un signal d'interruption commandant une opération d'écriture dans ladite première mémoire non volatile (1).

10. Micro-ordinateur mono-puce selon l'une quelconque des revendications 1 à 9, comprenant de plus un circuit de commande d'interruption (19) délivrant ledit signal d'interruption quand est détecté le fait que des données fournies par une source externe, destinées à être écrites dans ladite première mémoire non volatile (1), atteignent un nombre de bits prédéterminé.

11. Micro-ordinateur mono-puce selon l'une quelconque des revendications 1 à 10, dans lequel ledit circuit de commande d'interruption (19) comprend un compteur destiné à compter les données fournies et délivre un signal d'interruption quand la valeur dudit compteur atteint une valeur prédéterminée.

12. Micro-ordinateur mono-puce selon l'une quelconque des revendications 1 à 11, comprenant un registre à décalage (11) destiné à stocker lesdites données fournies par une source externe, et
lesdites données stockées dans ledit registre à décalage (11) sont écrites dans ladite première mémoire non volatile (1) par ledit circuit de commande sur la base des données de programme stockées dans ladite seconde mémoire non volatile (2).

13. Micro-ordinateur mono-puce selon l'une quelconque des revendications 1 à 12, dans lequel ladite seconde mémoire non volatile (2) est une mémoire en lecture seule qui n'autorise pas la réécriture des données.
